(19) Europäisches Patentamt
European Patent Office
Office européen des brevets

(11) **EP 2 579 360 A1**

(12) **EUROPEAN PATENT APPLICATION**
published in accordance with Art. 153(4) EPC

(43) Date of publication:
**10.04.2013 Bulletin 2013/15**

(51) Int Cl.:
***H01M 2/34*** (2006.01)   ***H01M 2/10*** (2006.01)
***H01M 2/20*** (2006.01)

(21) Application number: **11789396.6**

(22) Date of filing: **17.05.2011**

(86) International application number:
**PCT/JP2011/002725**

(87) International publication number:
**WO 2011/151981 (08.12.2011 Gazette 2011/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.06.2010 JP 2010126532**

(71) Applicant: **Panasonic Corporation**
**Kadoma-shi**
**Osaka 571-8501 (JP)**

(72) Inventors:
• **ITOI, Toshiki**
**Osaka 540-6207 (JP)**

• **OHSAWA, Yoshiki**
**Osaka 540-6207 (JP)**
• **NAGAYAMA, Masatoshi**
**Osaka 540-6207 (JP)**
• **NAKASHIMA, Takuya**
**Osaka 540-6207 (JP)**

(74) Representative: **Grünecker, Kinkeldey,**
**Stockmair & Schwanhäusser**
**Leopoldstrasse 4**
**80802 München (DE)**

(54) **BATTERY MODULE**

(57)     A battery module 100 includes a plurality of cells 10 arranged in a grid array. The cells 10 arranged in a row direction are connected together in parallel by a first connecting member 20. The cells 10 arranged in a column direction are connected together such that the cells 10 adjacent to each other in the column direction are connected together in series by a second connecting member 30. When an internal short-circuit occurs in any one of the cells 10, the first connecting member 20 connected to the cell 10 in which the internal short-circuit has occurred is melted by Joule heat generated due to a short-circuit current flowing into the cell 10 in which the internal short-circuit has occurred from the other cells 10 in which no internal short-circuit occurs via the first connecting member 20.

FIG.1

EP 2 579 360 A1

**Description**

TECHNICAL FIELD

The present disclosure relates to battery modules in which a plurality of batteries are arranged in a matrix.

BACKGROUND ART

Battery packs including a plurality of batteries accommodated in a case, and capable of outputting a predetermined voltage and current are widely used as power sources of a various devices, vehicles, etc. Specifically, a technique in which general-purpose batteries (for example, cylindrical secondary batteries used in notebook computers) are connected together in parallel and/or in series to obtain modules of battery assemblies for outputting a predetermined voltage and current, and these battery modules are combined together to be applicable to various applications, is beginning to be used. This module forming technique can reduce the size and weight of the battery modules themselves by increasing the performance of the batteries accommodated in the battery modules. Thus, this module forming technique has various advantages, such as an increase in workability in assembling a battery pack, and improvement in flexibility in mounting the battery module in areas of limited space, such as a vehicle.

However, if a high-temperature gas is generated in a battery included in the battery module, due to overcharge or overdischarge of the battery, or due to an internal short-circuit or external short-circuit, and a safety valve is opened to release the high-temperature gas, peripheral batteries may be exposed to the high-temperature gas, and normal batteries may also be affected by the high-temperature gas and deteriorated sequentially. Also, in a battery module including a plurality of batteries connected in parallel, if a battery included in the battery module becomes unable to serve as a battery due to an internal short-circuit, etc., the battery may function as a resistor, and the performance of the battery module is significantly reduced as a whole.

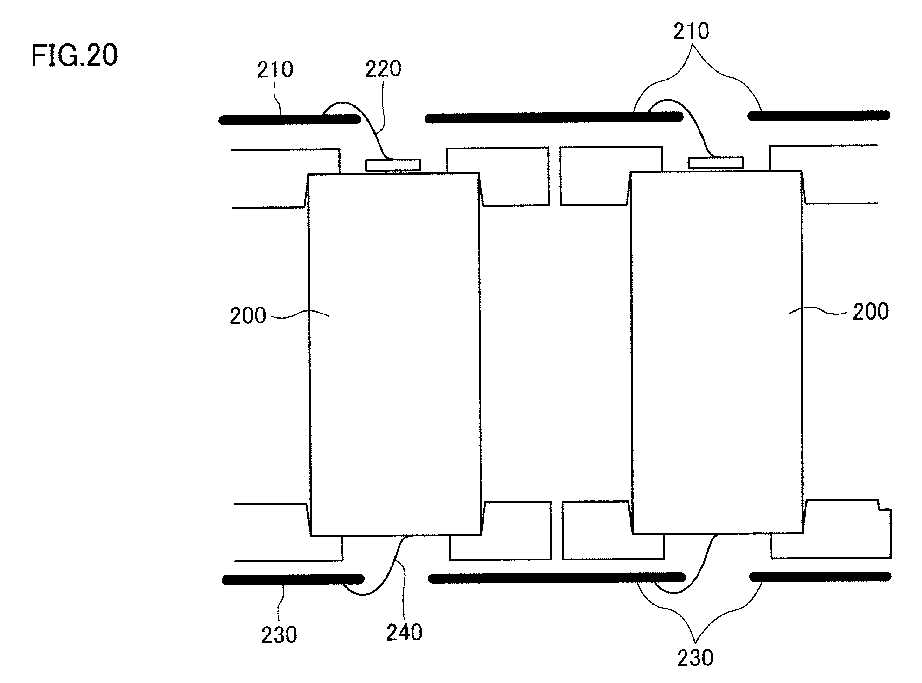

In view of this problem, Patent Document 1 discloses a battery group including a plurality of batteries 200 connected together in parallel via connecting members 210, 230 as shown in FIG. 20, in which a positive electrode and a negative electrode of each battery is connected to the connecting members 210, 230 by fusible links 220, 240, respectively. With this structure, if an internal short-circuit or the like occurs in a battery, the fusible links connected to the battery are melted by the overcurrent. Therefore, the battery in which an internal short-circuit or the like has occured can be electrically disconnected from the other batteries. Similar structures are also shown, for example, in Patent Documents 2 and 3.

Here, in the case where a battery module is formed by arranging a lot of general-purpose batteries, a plurality of batteries are connected together in parallel to form a battery assembly, and a plurality of battery assemblies are connected together in series so that a predetermined voltage and current are output.

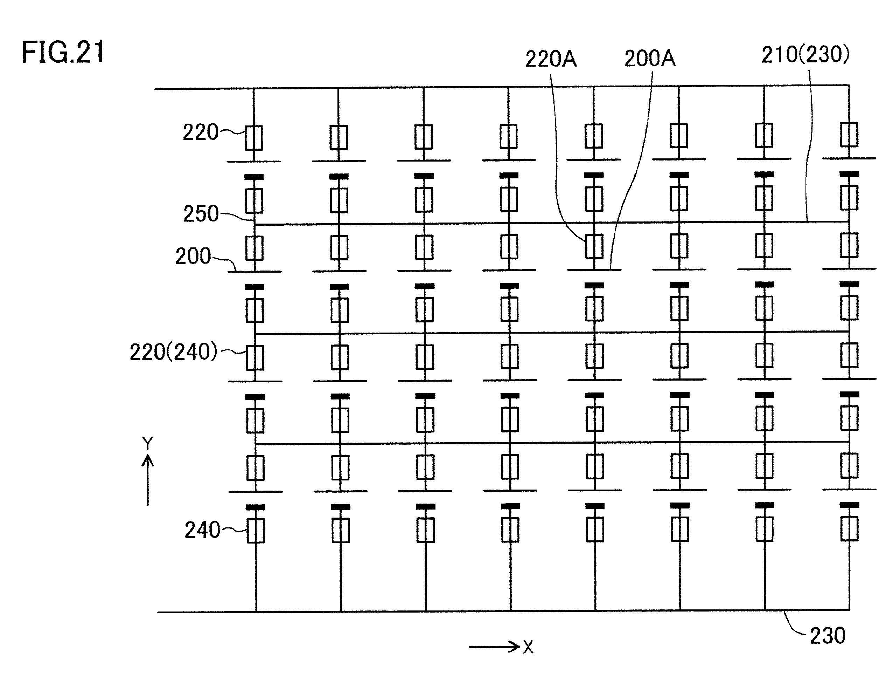

For example, if a battery assembly has a structure shown in Patent Document 1, a battery module obtained by connecting a plurality of battery assemblies in series is represented by the equivalent circuit diagram shown in FIG. 21.

That is, a plurality of batteries 200 are arranged in a grid array in which a fusible link 220 (240) is connected to each battery 200 in series; the batteries 200 arranged in a row direction (X direction) are connected together in parallel by a connecting member 210 (230); and the batteries 200 arranged in a column direction (Y direction) are connected together in series by a connecting member 250.

In this structure, for example, when an internal short-circuit or the like occurs in one battery 200A, the fusible link 220A is melted by overcurrent. Thus, the battery 200A in which the internal short-circuit or the like has occurred can be completely disconnected from the other batteries. With this structure, even if a battery included in the battery module malfunctions, the rest of the batteries are not affected by the malfunction, and the performance of the battery module as a whole is not reduced.

However, as shown in FIG. 21, every battery 200 needs to be provided with the fusible link 220 to have the malfunctioning battery completely disconnected from the other batteries. This may increase the number of parts, and increase the cost of the battery module.

Further, the batteries 200 arranged in the column direction are connected together in series with the fusible links 220 whose resistance is greater than the resistance of the connecting member 250. Therefore, heat may be generated at the fusible links 220, and the batteries may not withstand high current output.

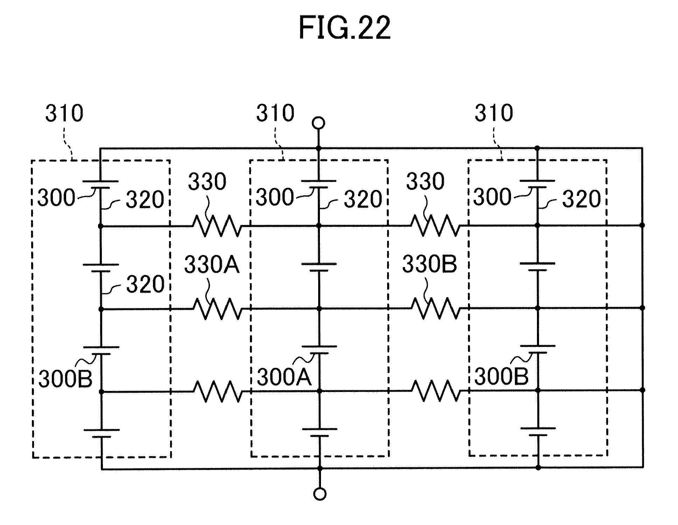

In view of these problems, Patent Document 4 discloses a battery assembly having a plurality of units 310 connected in parallel, each unit 310 including a plurality of batteries 300 connected in series, as shown in FIG. 22. In this battery assembly, the lines 320 with which the batteries 300 in the unit 310 are connected in series, are connected together by a resistor 330. In this structure, when, for example, an internal short-circuit occurs in the battery 300A, a current flows to the battery 300A from adjacent batteries 300 via the resistors 330A, 330B. However, it is possible to prevent a large short-circuit current from flowing to the battery 300A by setting the resistance of the resistors 330A, 330B to greater values. Further, since no fusible link is connected in series to the batteries 300, the resistance of the battery assembly can be maintained low.

CITATION LIST

PATENT DOCUMENT

Patent Document 1: United States Patent No. 7,671,565

Patent Document 2: Japanese Patent Publication No. 2001-511635 of PCT International Application
Patent Document 3: Japanese Patent Publication No. H6-223815
Patent Document 4: Japanese Patent Publication No. 2004-31268

SUMMARY OF THE INVENTION

TECHNICAL PROBLEM

In the battery assembly having a structure shown in Patent Document 4, it is indeed possible to prevent a large short-circuit current from flowing in a battery in which an internal short-circuit has occurred, while maintaining a low resistance of the battery assembly. However, the battery in which an internal short-circuit has occurred functions as a resistor, and therefore, the battery in which an internal short-circuit has occurred causes an external short-circuit among the other normal batteries. Thus, Joule heat is generated due to the external short-circuit current, and this may increase the temperatures of the normal batteries. Further, a value of the resistance of the resistor 330 need to be large so that the magnitude of the internal short-circuit current can be reduced. Thus, the resistor 330 may be significantly damaged by the Joule heat if a current flows to a battery 300 via the resistor 330 due to a potential difference between the batteries 300 in a normal operation.

The present disclosure was made in view of the above problems, and it is an objective of the invention to provide, at low cost, a battery module which has a simple structure and a high degree of safety, and in which even if one of the batteries included in the battery module malfunctions, the rest of the batteries are not affected by the malfunction, and the performance of the battery module as a whole is not reduced.

SOLUTION TO THE PROBLEM

To solve the above problems, a battery module according to the present disclosure includes a plurality of cells arranged in a grid array, wherein the cells arranged in a row direction are connected together in parallel by a first connecting member, the cells arranged in a column direction are connected together such that the cells adjacent to each other in the column direction are connected in series by a second connecting member, and when an internal short-circuit occurs in any one of the cells, the first connecting member connected to the cell in which the internal short-circuit has occurred is melted by Joule heat generated due to a short-circuit current flowing into the cell in which the internal short-circuit has occurred from the other cells in which no internal short-circuit occurs via the first connecting member.

In this structure, when an internal short-circuit occurs in a cell included in the battery module, the cell in which the internal short-circuit has occurred can be electrically disconnected from the other cells by melting by Joule heat the first connecting member connected to the cell in which the internal short-circuit has occurred. Thus, it is possible to provide, at low cost, a battery module which has a simple structure and a high degree of safety, and in which even if one of the batteries included in the battery module malfunctions, the rest of the batteries are not affected by the malfunction, and the performance of the battery module as a whole is not reduced, without providing an element such as a fusible link.

The first connecting member is preferably made of a metal member having a uniform cross-sectional area. In this case, the cross-sectional area of the first connecting member is set to a size which allows a temperature of the first connecting member to be equal to or greater than a melting point of the first connecting member due to the Joule heat generated by the short-circuit current flowing into the cell in which the internal short-circuit has occurred. Accordingly, the structure of the first connecting member can be simplified, and the first connecting member can be easily connected to the second connecting members each connecting between the cells adjacent to each other in the column direction.

ADVANTAGES OF THE INVENTION

According to the present disclosure, it is possible to provide, at low cost, a battery module which has a simple structure and a high degree of safety, and in which even if one of batteries included in the battery module malfunctions, the reset of the batteries are not affected by the malfunction, and the performance of the battery module as a whole is not reduced.

BRIEF DESCRIPTION OF THE DRAWINGS

FIG. 1 is an equivalent circuit diagram which shows a structure of a battery module according to one embodiment of the present disclosure.

FIG. 2 is an oblique view of the battery module according to one embodiment of the present disclosure.

FIG. 3 is an enlarged view of part of the battery module shown in FIG. 2.

FIG. 4(a) shows part of the battery module according to one embodiment of the present disclosure, viewed obliquely from below. FIG. 4(b) shows part of the battery module according to one embodiment of the present disclosure, viewed obliquely from above.

FIG. 5 is the battery module according to one embodiment of the present disclosure, viewed from a side along a column direction.

FIG. 6 is an enlarged view of part of the battery module shown in FIG. 5.

FIG. 7 shows the state in which a short-circuit current flows into a cell in which an internal short-circuit has occurred.

FIG. 8 is an equivalent circuit diagram for explaining a fuse function of a first connecting member of when an internal short-circuit occurs in a cell of the battery module according to one embodiment of the present disclosure.

FIG. 9 is an equivalent circuit diagram for explaining a fuse function of a first connecting member of when an internal short-circuit occurs in a cell of the battery module according to one embodiment of the present disclosure.

FIG. 10 is a plot graph showing the results of measurements of changes in temperatures of the cell in which an internal short-circuit has occurred and the cell adjacent to the short-circuited cell, with respect to time, in the battery module according to one embodiment of the present disclosure.

FIG. 11 is a plot diagram showing the results of measurements of changes in temperatures of the cell in which an internal short-circuit has occurred and the cell adjacent to the short-circuited cell, with respect to time, in a conventional battery assembly.

FIG. 12 is an oblique view of a battery module according to another embodiment of the present disclosure.

FIG. 13 is an enlarged view of part of the battery module shown in FIG. 12.

FIG. 14(a) shows part of the battery module according to another embodiment of the present disclosure, viewed from below. FIG.14(b) shows part of the battery module according to another embodiment of the present disclosure, viewed from above.

FIG. 15 is a battery module according to another embodiment of the present disclosure, viewed from a side along a column direction.

FIG. 16 is an enlarged view of part of the battery module shown in FIG. 15.

FIG. 17 is an equivalent circuit diagram for explaining a function of a current blocking element of when an external short-circuit occurs in the battery module shown in FIG. 1.

FIG. 18 is an equivalent circuit diagram showing a structure of a battery module according to another embodiment of the present disclosure.

FIG. 19 is an equivalent circuit diagram showing a structure of a battery module according to another embodiment of the present disclosure.

FIG. 20 is an enlarged view of part of a structure of battery assembly having a conventional fusible link.

FIG. 21 is an equivalent circuit diagram showing a structure of a conventional battery module.

FIG. 22 is an equivalent circuit diagram showing a structure of a conventional battery assembly.

DESCRIPTION OF EMBODIMENTS

Embodiments of the present disclosure will be described in detail below with reference to the drawings. The present disclosure is not limited to the following embodiments. Further, the embodiment can be modified without deviating from the effective scope of the present disclosure, and can be combined with other embodiments.

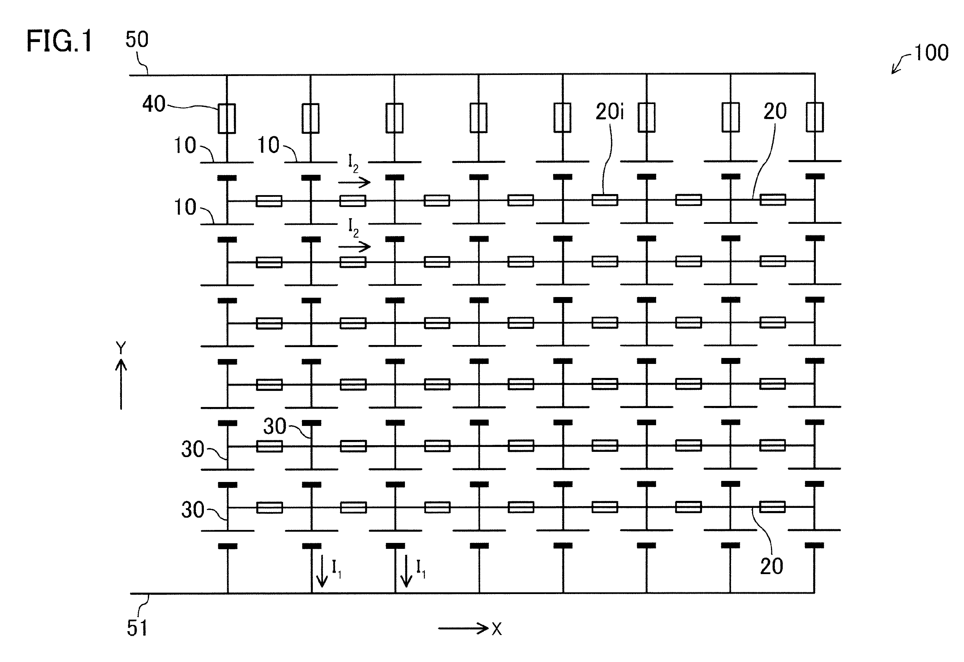

FIG. 1 is an equivalent circuit diagram which schematically shows a structure of a battery module 100 according to one embodiment of the present disclosure.

As shown in FIG. 1, the battery module 100 of the present embodiment includes a plurality of cells 10 arranged in a grid array. Types of the batteries 10 included in the battery module 100 of the present disclosure (hereinafter simply referred to as "cells") are not specifically limited as long as the batteries 10 are secondary batteries which can be charged and discharged. For example, lithium ion batteries and nickel hydrogen batteries may be used. Further, the secondary batteries may be a battery which can be used independently as a power source of a portable electric device, such as a notebook computer. In this case, high-performance, general-purpose batteries can be used as cells of the battery module. Therefore, it is possible to easily improve the performance of the battery module, and reduce the cost of the battery module.

In the battery module 100 of the present embodiment, the cells 10 arranged in a row direction (i.e., X direction) are connected together in parallel by a first connecting member 20, and the cells 10 arranged in a column direction (i.e., Y direction) are connected together such that the cells 10 adjacent to each other in the column direction are connected in series by a second connecting member 30. The endmost cells 10 of the cells 10 arranged in the column direction are connected to a positive electrode output terminal 50 or a negative electrode output terminal 51. A current blocking element (e.g., a current fuse) 40, described later, is placed between the cells 10 and the positive electrode output terminal 50. Here, the terms "row direction" and "column direction" are used to indicate the direction in which the cells 10 are connected together in parallel, and the direction in which the cells 10 are connected together in series, for the convenience sake, and do not have any other meanings.

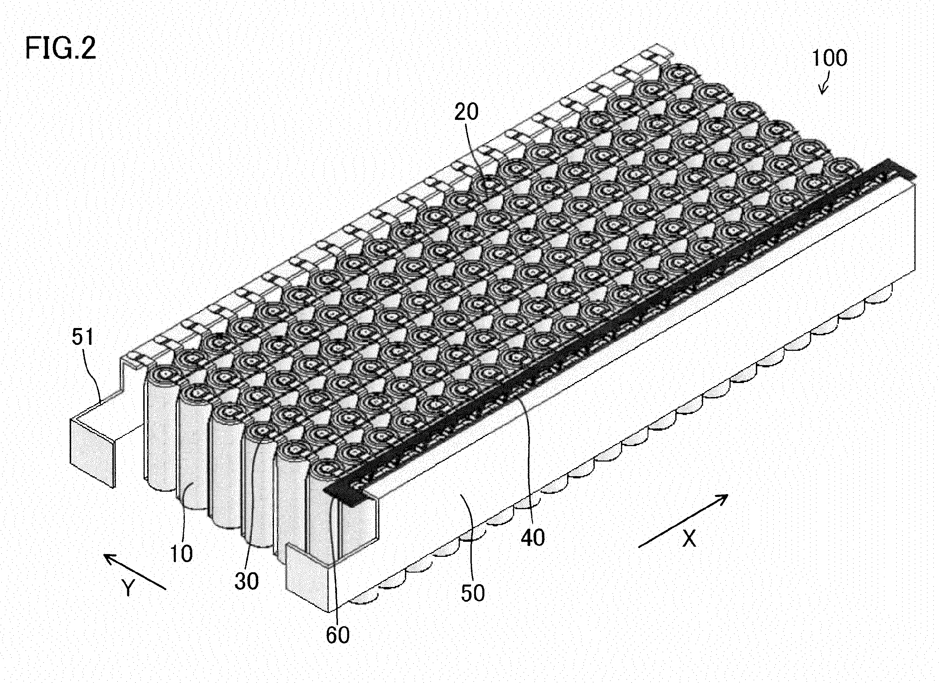

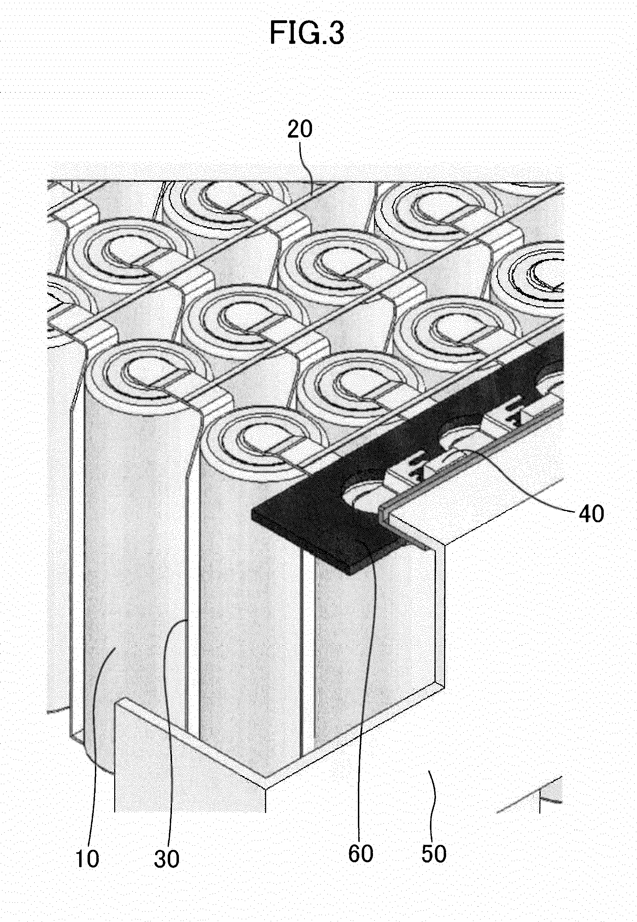

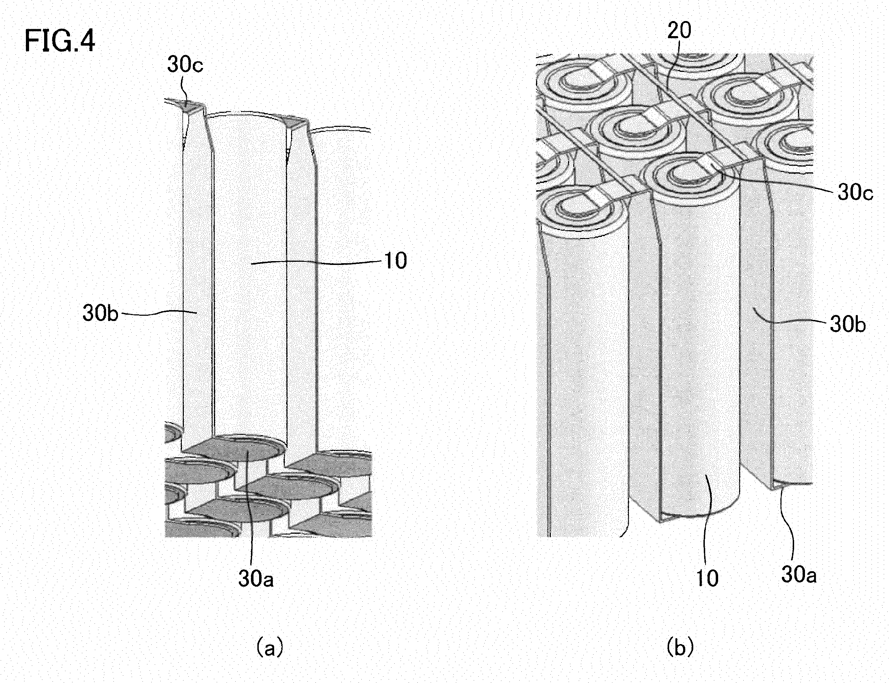

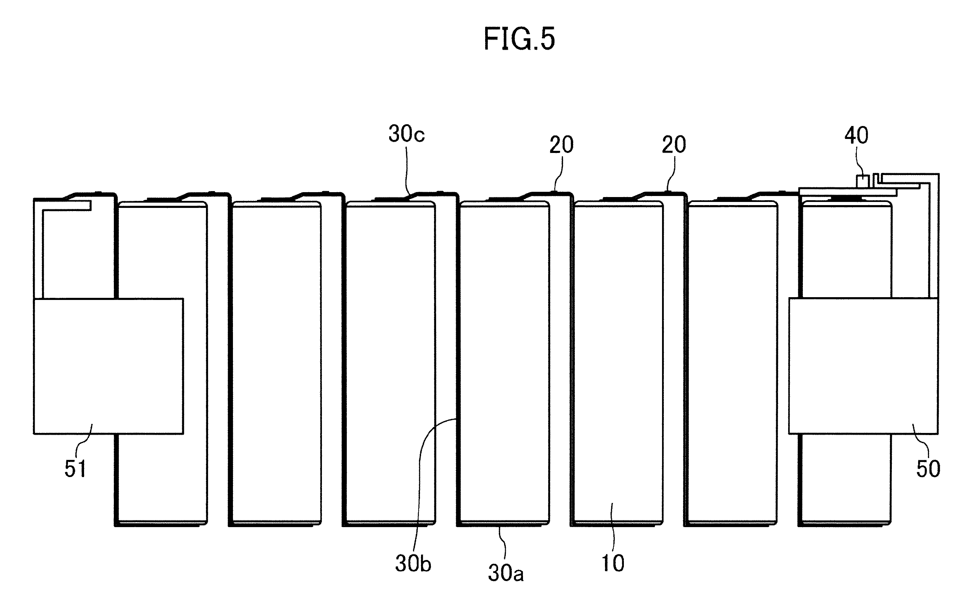

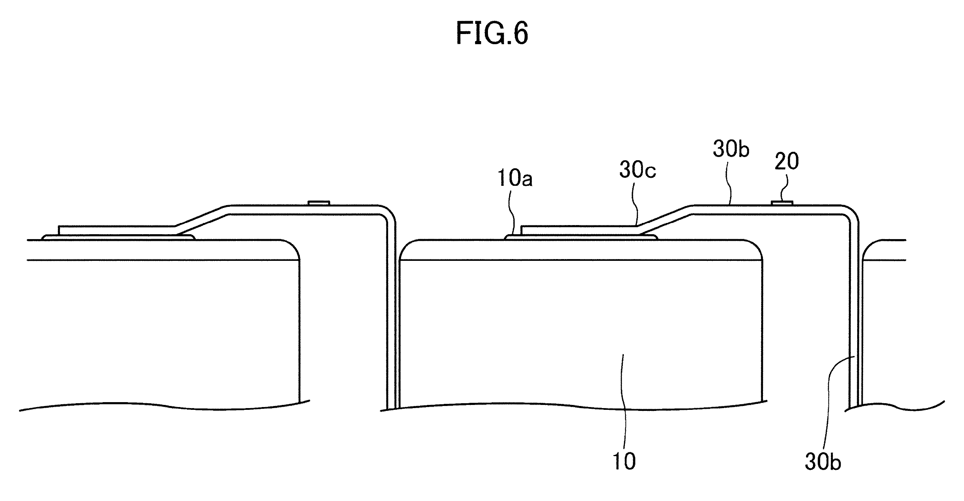

Next, a concrete structure of the battery module 100 according to the present embodiment will be described with reference to FIGS. 2-6. FIG. 2 is an oblique view of the battery module 100 of the present embodiment. FIG. 3 is an enlarged view of part of the battery module shown in FIG. 2. FIG. 4(a) shows part of the battery module 100 viewed obliquely from below. FIG. 4(b) shows part of the battery module 100 viewed obliquely from above. FIG. 5 is the battery module 100 viewed from a side along the column direction. FIG. 6 is an enlarged view of part of the battery module shown in FIG. 5.

As shown in FIG. 2, the battery module 100 includes a plurality of cells 10 arranged in a grid array. In the present embodiment, one row includes twenty cells 10, and one column includes seven cells 10. However, of course, the number of cells 10 arranged in the grid array is not limited.

As shown in FIGS. 4(a) and 4(b), FIG. 5, and FIG. 6, the second connecting member 30 which connects, in series, between the cells 10 adjacent to each other in the column direction includes a portion 30a connected to a negative electrode terminal on the bottom of a cell 10 (e.g., a bottom surface of a battery case), a portion 30b extending from the bottom to the top of the cell 10 along a side surface of the cell 10, and a portion 30c extending from the top of the cell 10 to the top of a cell 10 adjacent to the cell 10, and connected to a positive electrode terminal of the adjacent cell 10 (e.g., a protrusion on a sealing plate of the battery case).

On the other hand, as shown in FIG. 1, FIG. 2, FIG. 5, and FIG. 6, the first connecting member 20 which connects the cells 10 arranged in the row direction together in parallel is connected to the portion 30c of each second connecting member 30 which connects between the cells 10 adjacent to each other in the column direction.

Here, it is preferable that the first connecting member 20 is made of metal wire or metal ribbon, and the first connecting member 20 is connected to the second connecting member 30 connecting between the cells 10 adjacent to each other in the column direction, by, for example, wire bonding, laser welding, or resistance welding.

Further, as shown in FIG. 2, the endmost cells 10 of the cells 10 arranged in the column direction are connected to the positive electrode output terminal (e.g., a positive electrode bus bar) 50, or the negative electrode output terminal (e.g., a negative electrode bus bar) 51. As shown in FIG. 2 and FIG. 3, a circuit board 60 is provided on the top of the cells 10 closest to the positive electrode output terminal 50, and a fuse 40 is placed on the circuit board 60 between the cell 10 and the positive electrode output terminal 50. For example, a control circuit which detects and controls charge and discharge of the battery module 100, and voltages or temperatures of the cells 10 may be provided on the circuit board 60 in addition to the fuse 40.

The inventors of the present application examined the first connecting member 20 connecting, in parallel, the cells 10 arranged in a row direction in the battery module 100 of which the equivalent circuit diagram is shown in FIG. 1, and made the following findings.

At a time of discharge of the battery module 100 shown in FIG. 1, the magnitude of the current $I_2$ flowing in the row direction along which the plurality of cells 10 are connected in parallel is very small, in general, because a potential difference between adjacent cells 10 is small, and typically one tenth (1/10) or smaller than the magnitude of the current $I_1$ flowing in the column direction along which a plurality of cells 10 are connected in series. Typically, for example, the current $I_1$ flowing in the column direction is in a range of from about 1 A to about 15 A, whereas the current $I_2$ flowing in the row direction is 0.1 A or smaller in the case of a lithium ion battery.

Further, during a charge of the battery module 100, as well, only a small current which eliminates a potential difference between adjacent cells 10 flows in the row direction along which the plurality of cells 10 are connected in parallel. Due to the flow of such a current, the potential difference between the adjacent cells 10 become smaller, which results in a further decrease in the magnitude of the current $I_2$ flowing in the row direction at a time of the discharge.

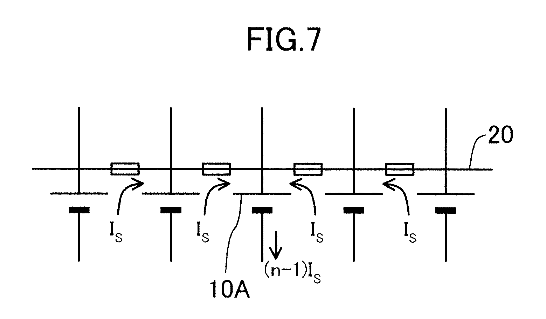

Turning to FIG. 7 showing an internal short-circuit which has occurred in the cell 10A among the plurality of cells 10 connected in parallel in the row direction, where the short-circuit current of one cell is represented by Is, an (n-1)$I_s$ short-circuit current flows in the cell 10A in which the internal short-circuit has occurred, from the other (n-1) cells 10. For example, if the internal resistance is 50 m$\Omega$, the short-circuit current is in a range of from about 50 A to about 100 A in the case of a lithium ion battery.

As described above, the significant characteristic of the current $I_2$ flowing in the row direction along which the plurality of cells 10 connected in parallel is that the magnitude of the current $I_2$ is very small during a normal operation, but is very large in the event of an internal short-circuit. For this reason, even if the resistance of the first connecting member 20 which connects the cells 10 in parallel in the row direction is larger than the resistance of the second connecting member 30 which connects the cells 10 in series in the column direction, it has a minimal effect on the characteristics of the battery module during a normal operation. Moreover, the first connecting member 20 may serve as a fuse when an internal short-circuit occurs, if the first connecting member 20 connected to the cell 10 in which the internal short-circuit has occurred is melted by Joule heat generated due to a short-circuit current.

In view of this, the inventors of the present application focused on a metal material having a low melting point, and further considered whether the metal material could serve as a fuse when used as the first connecting member 20.

If the first connecting member 20 is made of a metal member having a uniform cross-sectional area (A), the temperature increase $\Delta T$ due to Joule heat (E) after time t has passed since a current (I) flowed in the first connecting member 20 can be calculated by the following Equation (1).

$$\Delta T = E/(Cp \cdot M)$$

$$= (I_2 \cdot R \cdot t)/(Cp \cdot \rho \cdot A \cdot L)$$

$$= (I_2 \cdot r \cdot L/A \cdot t)/(Cp \cdot \rho \cdot A \cdot L)$$

$$= (I_2 \cdot r \cdot t)/(Cp \cdot \rho \cdot A2) \quad \cdots \quad \text{Equation (1)}$$

where Cp is specific heat capacity; M is mass; R is resistance; $\rho$ is density; L is length; and r is electric resistivity.

Equation (1) shows that the temperature increase $\Delta T$ is greater as the metal member has smaller specific heat capacity (Cp), smaller density (p), and larger electric resistivity (r) in terms of properties, and smaller cross-sectional area (A) in terms of the shape. Equation (1) also shows that if heat dissipation is small enough to be ignored, the temperature increase $\Delta T$ does not depend on the length (L) of the first connecting member 20.

In view of this, a temperature increase $\Delta T$ which is expected to occur in the event of an internal short-circuit if an aluminum having a relatively low melting point is used as the first connecting member 20, was calculated by Equation (1).

Table 1 shows the results. The interval between the cells 10 in the row direction is 19.2 mm, and the length (L) of the first connecting member 20 connecting between adjacent cells 10 is 20 mm. Further, a current (I) which is expected to flow during a normal operation is 0.1 A, and a current (I) which is expected to flow in the event of an internal short-circuit is 100 A.

[Table 1]

| MATERIAL | MELTING POINT (°C) | SPECIFIC HEAT CAPACITY Cp (J/kg/K) | DENSITY ρ (kg/m$^3$) | ELECTRIC RESISTIVITY r (Ωm) | LENGTH L (mm) | CROSS-SECTIONAL AREA A (mm$^2$) | MASS M=ρ·A·L (kg) | RESISTANCE R=r·L/A (Ω) | CURRENT I (A) | TIME t (sec) | ENERGY E=I$^2$·R·t (J) | TEMPERATURE INCREASE ΔT=E/M/Cp (°C) | MELTED ? |
|---|---|---|---|---|---|---|---|---|---|---|---|---|---|
| ALUMINUM | 660 | 900 | 2,700 | 2.65E-08 | 20 | 0.007 | 3.78E-07 | 0.076 | 100 | 0.1 | 8.E+01 | 222,558 | YES |
| | | | | | | | | | 0.1 | 100 | 8.E-02 | 223 | NO |
| | | | | | | 0.03 | 1.62E-06 | 0.018 | 100 | 0.1 | 2.E+01 | 12,117 | YES |
| | | | | | | | | | 0.1 | 100 | 2.E-02 | 12 | NO |
| | | | | | | 0.12 | 6.48E-06 | 0.004 | 100 | 0.1 | 4.E+00 | 757 | YES |
| | | | | | | | | | 100 | 1 | 4.E+01 | 7,573 | YES |
| | | | | | | | | | 0.1 | 100 | 4.E-03 | 1 | NO |
| | | | | | | 0.3 | 1.62E-05 | 0.002 | 100 | 0.1 | 2.E+00 | 121 | NO |
| | | | | | | | | | 100 | 1 | 2.E+01 | 1,212 | YES |
| | | | | | | | | | 0.1 | 100 | 2.E-03 | 0 | NO |

As shown in Table 1, in the case where the cross-sectional area (A) is 0.007 mm$^2$ (a diameter of about 0.1 mm), the temperature increase $\Delta T$ after 100 seconds (t=100 sec) at the current (I=0.1 A) expected to flow during a normal operation is 223°C, which is lower than the melting point of aluminum (i.e., 660°C), and the temperature increase $\Delta T$ after 0.1 second (t= 0.1 sec) at the current (I=100 A) expected to flow in the event of an internal short-circuit is 222,558°C, which is higher than the melting point of aluminum (660°C). This suggests that the first connecting member 20 having such a cross-sectional area is melted at the instant when an internal short-circuit occurs. Thus, the first connecting member 20 made of the aluminum having such a cross-sectional area can serve as a fuse in the event of an internal short-circuit, while also serving as a connecting member connecting the cells 10 together in parallel in the row direction during a normal operation.

Here, the resistance (R) of the first connecting member 20 is 76 m$\Omega$ also in the case where the cross-sectional area is 0.007 mm$^2$. Further, the current $I_2$ flowing in the row direction at a time of discharge is small (i.e., 0.1 A or less) as described above, and a voltage drop caused by the current $I_2$ flowing in the first connecting member 20 is very small (i.e., only 8 mV or so). Therefore, the aluminum having such a cross-sectional area has a minimal effect on the characteristics of the battery module.

In the case where the cross-sectional area (A) is 0.03 mm$^2$ (a diameter of about 0.2 mm), the temperature increase $\Delta T$ after 100 seconds (t=100 sec) at the current (I=0.1 A) expected to flow during a normal operation is 12°C, and the temperature increase $\Delta T$ after 0.1 second (t=0.1 sec) at the current (I=100 A) expected to flow in the event of an internal short-circuit is 12,117°C. This suggests that the first connecting member 20 made of the aluminum having such a cross-sectional area, too, is melted at the instant when an internal short-circuit occurs. Thus, the first connecting member 20 made of the aluminum having such a cross-sectional area can serve as a fuse, while also serving as a connecting member connecting the cells 10 together in parallel in the row direction during a normal operation.

In the case where the cross-sectional area (A) is 0.12 mm$^2$ (a diameter of about 0.4 mm), the temperature increase $\Delta T$ after 100 seconds (t=100 sec) at the current (I=0.1 A) expected to flow during a normal operation is 1°C, and the temperature increase $\Delta T$ after 0.1 second (t=0.1 see) at the current (I=100 A) expected to flow in the event of an internal short-circuit is 757°C. Although the temperature increase $\Delta T$ expected to occur in the invent of an internal short-circuit is greater than the melting point of aluminum (660°C), the first connecting member 20 may not be melted if heat dissipation is taken into consideration. However, the temperature increase $\Delta T$ after 1 second (t=1 sec) at the current (I=100 A) expected to flow in the event of an internal short-circuit is 7,573°C, and therefore, the first connecting member 20 made of the aluminum having such a cross-sectional area may also be melted shortly after occurrence of the internal short-circuit (within about one second). Thus, the first connecting member 20 made of the aluminum having such a cross-sectional area can serve as a fuse in the event of an internal short-circuit, while also serving as a connecting member connecting the cells 10 together in parallel in the row direction during a normal operation.

In the case where the cross-sectional area (A) is 0.3 mm$^2$ (a diameter of 0.6 mm), the temperature increase $\Delta T$ after 100 seconds (t=100 sec) at the current (I=0.1 A) expected to flow during a normal operation is 1°C or less, and the temperature increase $\Delta T$ after 0.1 second (t=0.1 sec) at the current (I=100 A) expected to flow in the event of an internal short-circuit is 121°C. The temperature increase AT (t=0.1 sec) expected to occur in the event of an internal short-circuit does not reach the melting point of aluminum (660°C). However, the temperature increase $\Delta T$ after one second (t=1 sec) is 1,212°C, and therefore, the first connecting member 20 made of the aluminum having such a cross-sectional area may also be melted shortly after occurrence of the internal short-circuit (within about one second). Thus, the first connecting member 20 made of the aluminum having such a cross-sectional area can serve as a fuse, while also serving as a connecting member connecting the cells 10 together in parallel in the row direction during a normal operation.

In view of this, a cell 10 in which an internal short-circuit has occurred can be electrically disconnected from the rest of the cells 10 by utilizing the following structure of the battery module 100 according to the present embodiment in which, among the first connecting members 20 connecting the cells 10 arranged in the row direction together in parallel, the first connecting member 20 connected to the cell 10 in which the internal short-circuit has occurred is melted by Joule heat generated due to the short-circuit current flowing from the other cells 10 in which no internal short-circuit has occurred, via the first connecting member 20 to the cell 10 in which the internal short-circuit has occurred, when the internal short-circuit occurred. With this structure, it is possible to provide, at low cost, a battery module 100 which has a simple structure and a high degree of safety, and in which even if one of cells 10 included in the battery module 100 malfunctions, the rest of the cells 10 are not affected by the malfunction, and the performance of the battery module 100 as a whole is not reduced, without providing an element such as a fusible link.

The values of the temperature increase $\Delta T$ shown in Table 1 are values without consideration of the heat dissipation from the first connecting member 20. Thus, it is preferable to decide the actual cross-sectional area (i.e., the diameter) of the first connecting member 20 in consideration of the heat dissipation from the first connecting member 20. Further, the diameter of the first connecting member 20 is preferably 0.1 mm or more in terms of ease of handling in the fabrication.

Here, to reduce the cost of the material of the first connecting member 20, it is preferable that the first connecting member 20 is made of a metal member having a uniform cross-sectional area. In this case, the cross-sectional area of the first connecting member 20 may be set to a size which allows the temperature of the first connecting member 20 to be equal to or greater than the melting point of the first connecting member 20 due to Joule heat generated by the short-circuit current flowing in the cell 10 in which an internal short-circuit has occurred.

Further, to reduce the cost of the material of the first connecting member 20, it is preferable that the first connecting member 20 is made of a single metal, not of an alloy of different types of metals or a clad metal. One of preferable examples of the single metal is an aluminum material. In this case, the cross-sectional area of the first connecting member 20 is 0.3 mm$^2$ or less, and more preferably in a range of between 0.007 mm$^2$ and 0.12 mm$^2$.

In FIG. 1 which shows an equivalent circuit diagram of the battery module 100, a fuse elements 20i are shown as if they are located between adjacent cells 10 as the first connecting member 20 which connects between the cells 10 in parallel in the row direction. However, the fuse elements 20i are shown in the equivalent circuit diagram to indicate that the first connecting member 20 can serve as a fuse, and it is not intended to show the provision of actual fuse elements.

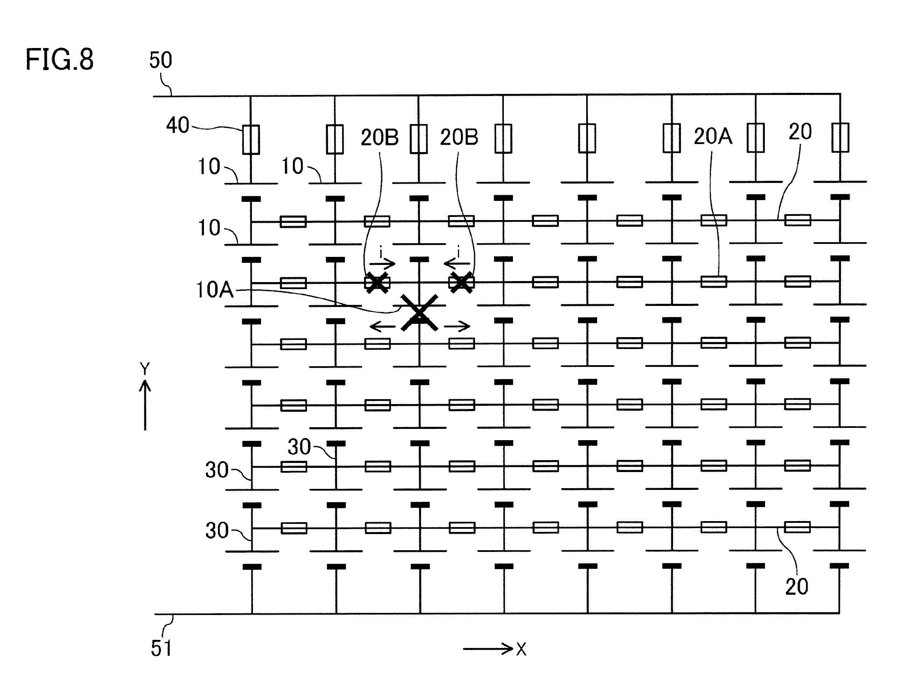

FIG. 8 is an equivalent circuit diagram for explaining a fuse function of the first connecting member 20 of when an internal short-circuit occurs in the cell 10A of the battery module 100 shown in FIG. 1. As shown in FIG. 8, when an internal short-circuit occurs in the cell 10A, a short-circuit current i flows in the first connecting member 20 connected to the cell 10A in which the internal short-circuit has occurred. On the instant, the temperature of the first connecting member 20 becomes equal to or higher than the melting point of the first connecting member 20 due to Joule heat generated in the first connecting member 20. As a result, the portions 20B, 20B of the first connecting member 20 are melted which are located between the cell 10A in which the internal short-circuit has occurred and the cells 10 next to the cell 10A in a lateral direction. Consequently, the cell 10A in which the internal short-circuit has occurred is completely electrically disconnected from the other cells 10 connected in parallel to the cell 10A. Thus, it is possible to prevent a short-circuit current from flowing from the other cells 10.

As shown in FIG. 7, the short-circuit current flowing in the first connecting member 20 is larger at the portions 20B near the cell 10A in which the internal short-circuit has occurred, than at the portion 20A apart from the cell 10A in which the internal short-circuit has occurred. For this reason, in general, the portions 20B, 20B of the first connecting member 20 are melted which are located between the cell 10A in which the internal short-circuit has occurred and the cells 10 adjacent to the cell 10A.

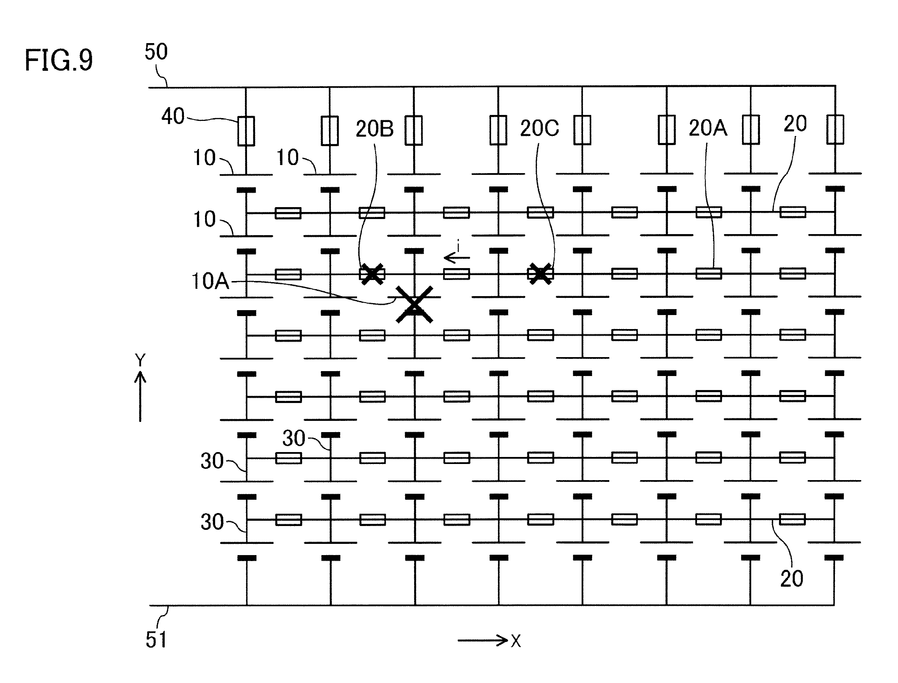

However, the temperature increase of the first connecting member 20 due to Joule heat does not depend on the length (L) of the first connecting member 20 if heat dissipation is not taken into consideration, as described above. Therefore, the temperature of the entire first connecting member 20 may become equal to or higher than the melting point on the instant. Thus, the portion 20C apart from the cell 10A in which the internal short-circuit has occurred can be melted as shown in FIG. 9. However, in this case as well, a short-circuit current continues to flow in a non-melted portion connected to the cell 10A in which the internal short-circuit occurred, and therefore, the portions 20B, 20B of the first connecting member 20 are melted in the end, which are located between the cell 10A in which the internal short-circuit occurred and the cells 10 next to the cell 10A in a lateral direction.

In the battery module 100 of the present disclosure, if an internal short-circuit occurs in a cell 10, the cell 10 in which the internal short-circuit has occurred can be electrically disconnected from the other cells 10, as described above. Therefore, influence on the other batteries 10 can be reduced. This effect is particularly significant if the cells 10 are arranged close to each other.

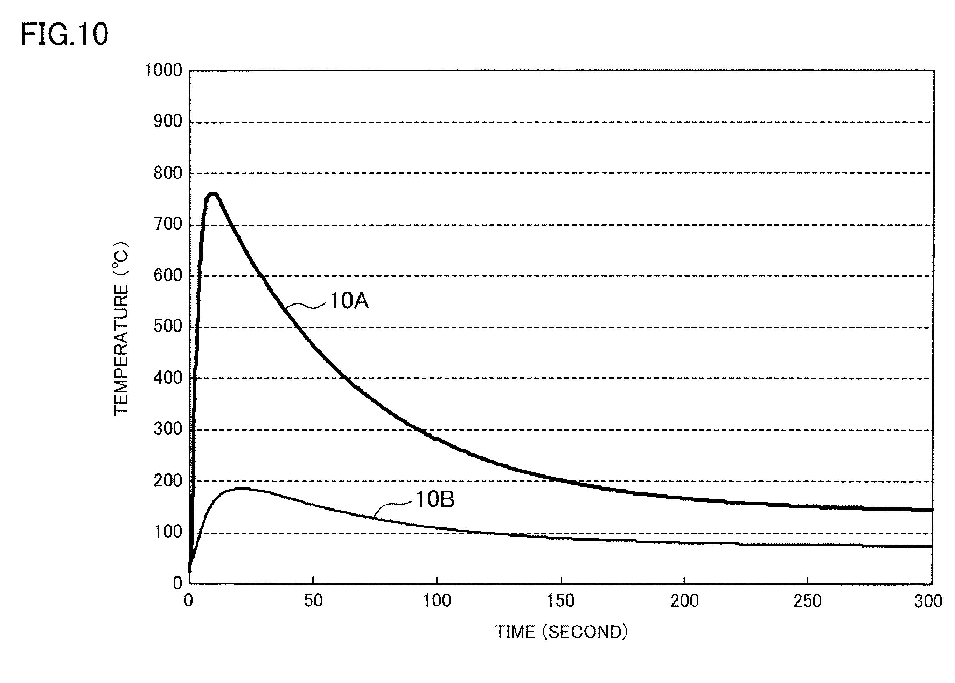

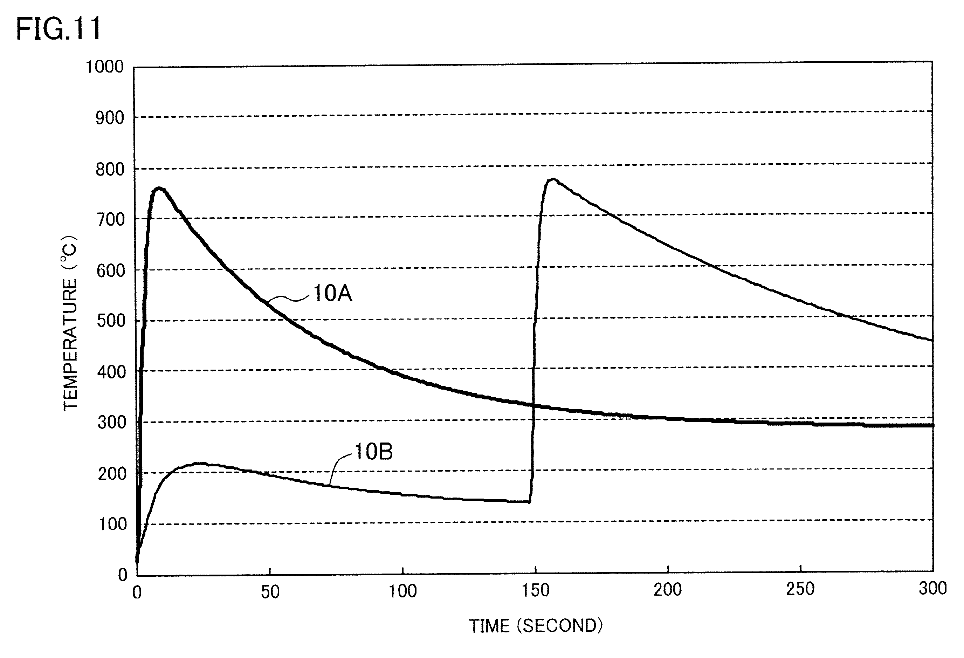

Now, an influence of a cell 10 in which an internal short-circuit has occurred, on a cell 10 adjacent to the cell 10 will be described below with reference to FIG. 10 and FIG. 11. FIG. 10 and FIG. 11 are plot graphs each showing the results of measurements of changes in temperatures of the cell 10A in which an internal short-circuit has occurred and the cell 10B adjacent to the cell 10A, with respect to time. FIG. 10 shows the result of the battery module 100 of the present disclosure. FIG. 11 shows the result of the battery assembly having a structure disclosed in Patent Document 4.

For measurement, twenty cylindrical lithium ion batteries in 18650 size (diameter of 18 mm × length of 65mm) having a capacity of 2.9 Ah are located at a distance of 19.2 mm from one another. A nail penetration test was conducted to one of the batteries (a cell 10A), and the surface temperatures of the cell 10A and a cell 10B adjacent to the cell 10A were measured. Here, in the battery module 100 of the present disclosure, an aluminum wire having a diameter of 0.2 mm, a cross-sectional area of 0.03 mm$^2$, a length of 20 mm, and a resistance value of 18 mΩ was used as the first connecting member 20. In the battery assembly having a structure shown in Patent Document 4, a metal oxide film resistor having a resistance value of 1 Ω was used as a resistor 330.

In the battery module 100 of the present disclosure, as shown in FIG. 10, the temperature of the cell 10A in which an internal short-circuit occurred increased to about 760°C, but since the first connecting member 20 was melted in about one second by Joule heat generated by the internal short-circuit current, the temperature of the cell 10A decreased to equal to or lower than 200°C in 150 seconds because of heat dissipation of the cell 10A itself. The temperature of the adjacent cell 10B was once increased to almost 200°C by the influence of the heat dissipation from the cell 10A, but thereafter decreased to equal to or lower than 100°C in 150 seconds, with a decrease in an amount of heat dissipation of the cell 10A.

**EP 2 579 360 A1**

On the other hand, in the battery assembly having a structure shown in Patent Document 4 as shown in FIG. 11, the temperature of the cell 10A in which an internal short-circuit occurred increased to about 760°C, but thereafter gradually decreased due to the resistor 330 reducing the internal short-circuit current. However, regardless of the reduction of the internal short-circuit current, the internal short-circuit current continues to flow to the cell 10A to generate Joule heat. Therefore, a reduction of the temperature of the cell 10A slows down compared to the case shown in FIG. 10, and the temperature was equal to or higher than 300°C even after 150 seconds. The temperature of the adjacent cell 10B was increased to equal to or higher than 200°C by the influence of the heat dissipation from the cell 10A, and gradually decreased thereafter. However, the temperature of the adjacent cell 10B abruptly increased again to equal to or higher than 700°C after 150 seconds. This abrupt increase may be a result of heat generation of the cell 10B which used to be a normal cell, but caused an internal short-circuit for the reasons below.

That is, the cell 10A in which an internal short-circuit has occurred serves as a resistor, and therefore, the cell 10A in which an internal short-circuit has occurred causes an external short-circuit among the normal cell 10B. Therefore, the temperature is increased by Joule heat generated due to an external short-circuit current. Further, the temperature of the cell 10B is further increased because the temperature of the cell 10A in which the internal short-circuit occurred is maintained at a high temperature equal to or higher than 300°C, as well as by the influence of the heat dissipation from the cell 10A. As a result, the temperature of the cell 10B which used to be a normal cell was maintained above 150°C for more than 100 seconds, which resulted in melting of a separator and an internal short-circuit.

Accordingly, in the battery module 100 including a plurality of cells 10 arranged close to one another, it is important to immediately electrically disconnect a cell 10 in which an internal short-circuit has occurred from the other cells 10 to avoid the influence of the cell 10 in which an internal short-circuit has occurred on the other cells 10.

Types of the metal material used as the first connecting member 20 of the present disclosure are not specifically limited. For example, magnesium (melting point: 651°C), zinc (melting point: 419°C), tin (melting point: 232°C) etc. having a low melting point may also be used, in addition to aluminum.

Table 2 shows the temperature increase of the first connecting members 20 made of the above materials which were calculated by Equation (1) in a similar manner as in Table 1.

**10**

[Table 2]

| MATERIAL | MELTING POINT (°C) | SPECIFIC HEAT CAPACITY $C_p$ (J /kg/K) | DENSITY $\rho$ (kg/m$^3$) | ELECTRIC RESISTIVITY r (Ωm) | LENGTH L (mm) | CROSS-SECTIONAL AREA A (mm$^2$) | MASS M=$\rho$·A·L (kg) | RESISTANCE R=r·L/A (Ω) | CURRENT I (A) | TIME t (sec) | ENERGY E=I$^2$·R·t (J) | TEMPERATURE INCREASE Δ T=E/M/C$\rho$ (°C) | MEMTED ? |
|---|---|---|---|---|---|---|---|---|---|---|---|---|---|
| MAGNESIUM | 650 | 1,020 | 1,738 | 4.42E-08 | 20 | 0.007 | 2.43E-07 | 0.126 | 100 | 0.1 | 1.E+02 | 508,834 | YES |
| | | | | | | | | | 0.1 | 100 | 1.E-01 | 509 | NO |
| | | | | | | 0.12 | 4.17E-06 | 0.007 | 100 | 0.1 | 7.E+00 | 1,731 | YES |
| | | | | | | | | | 0.1 | 100 | 7.E-03 | 2 | NO |
| ZINC | 420 | 390 | 7,140 | 6.02E-08 | 20 | 0.007 | 1.00E-06 | 0.172 | 100 | 0.1 | 2.E+02 | 441,202 | YES |
| | | | | | | | | | 0.1 | 100 | 2.E-01 | 441 | NO |
| | | | | | | 0.12 | 1.71E-05 | 0.010 | 100 | 0.1 | 1.E+01 | 1,501 | YES |
| | | | | | | | | | 0.1 | 100 | 1.E-02 | 2 | NO |
| TIN | 232 | 228 | 7,310 | 1.09E-07 | 20 | 0.03 | 4.39E-06 | 0.073 | 100 | 0.1 | 7.E+01 | 72,666 | YES |
| | | | | | | | | | 0.1 | 100 | 7.E-02 | 73 | NO |
| | | | | | | 0.12 | 1.75E-05 | 0.018 | 100 | 0.1 | 2.E+01 | 4,542 | YES |
| | | | | | | | | | 0.1 | 100 | 2.E-02 | 5 | NO |

As shown in Table 2, in the cases of magnesium and zinc, the temperature increase ($\Delta$T) does not reach the melting point at the current of 0.1 A expected to flow during a normal operation, and the temperature increase ($\Delta$T) instantly (t=0.1 sec) reaches the melting point or above at the short-circuit current of 100 A expected to flow in the event of an internal short-circuit, in both of the cases where the cross-sectional area (A) is 0.007 mm$^2$ and 0.12 mm$^2$. Similarly, in the case of tin, the temperature increase ($\Delta$T) does not reach the melting point at the current of 0.1 A expected to flow during a normal operation, and the temperature increase ($\Delta$T) instantly (t=0.1 sec) reaches the melting point and above at the short-circuit current of 100 A expected to flow in the event of an internal short-circuit, in both of the cases where the cross-sectional area (A) is 0.03 mm$^2$ and 0.12 mm$^2$. Thus, magnesium, zinc, and tin can also be used as the first connecting member 20.

Since tin has a melting point lower than the melting points of magnesium and zinc, and has a small specific heat capacity (Cp), the temperature increase ($\Delta$T) becomes too high if the cross-sectional area is too small. Thus, the cross-sectional area is preferably 0.03 mm$^2$ or more so that the cells 10 can be connected in parallel throughout a normal operation.

Table 3 shows the temperature increase of the first connecting members 20 made of copper (melting point: 1083°C) and nickel (melting point: 1455°C) having a high melting point which were calculated by Equation (1) in a similar manner as in Table 1.

[Table 3]

| MATERIAL | MELTING POINT (°C) | SPECIFIC HEAT CAPACITY Cp (J/kg/K) | DENSITY $\rho$ (kg/m$^3$) | ELECTRIC RESISTIVITY r ($\Omega$m) | LENGTH L (mm) | CROSS-SECTIONAL AREA A (mm$^2$) | MASS M=$\rho \cdot$A$\cdot$L (kg) | RESISTANCE R=r$\cdot$L/A ($\Omega$) | CURRENT I (A) | TIME t (sec) | ENERGY E=I$^2\cdot$R$\cdot$t (J) | TEMPERATURE INCREASE $\Delta$T=E/M/C$\rho$ (°C) | MELTED ? |
|---|---|---|---|---|---|---|---|---|---|---|---|---|---|
| COPPER | 1,084 | 380 | 8,920 | 1.68E-08 | 20 | 0.03 | 5.35E-06 | 0.011 | 100 | 0.1 | 1.E+01 | 5,507 | YES |
| | | | | | | | | | 0.1 | 100 | 1.E-02 | 6 | NO |
| NICKEL | 1,455 | 440 | 8,908 | 6.99E-08 | 20 | 0.03 | 5.34E-06 | 0.047 | 100 | 0.1 | 5.E+01 | 19,815 | YES |
| | | | | | | | | | 0.1 | 100 | 5.E-02 | 20 | NO |

As shown in Table 3, even in the case where copper or nickel having a high melting point is used, the temperature can be instantly increased to the melting point or above at the short-circuit current of 100 A expected to flow in the event of an internal short-circuit by setting the cross-sectional area (A) to about 0.03 mm$^2$. Therefore, copper and nickel can be used as a fuse. However, since the temperatures of copper and nickel need to be increased to 1000°C or above so that the copper and nickel are melted, it is preferable to use the metal materials shown in Table 1 and Table 2 of which the melting point is low, i.e., 700°C or below, in consideration of thermal impact on the other cells 10.

The battery module 100 of the present disclosure has a structure represented by the equivalent circuit diagram shown in FIG. 1, and may have an actual structure shown in FIG. 2. However, the structure is not necessarily limited to the structure shown in FIG. 2. For example, the structure of the second connecting member 30 is not limited to the structure shown in FIG. 2, and the second connecting member 30 may have various structures.

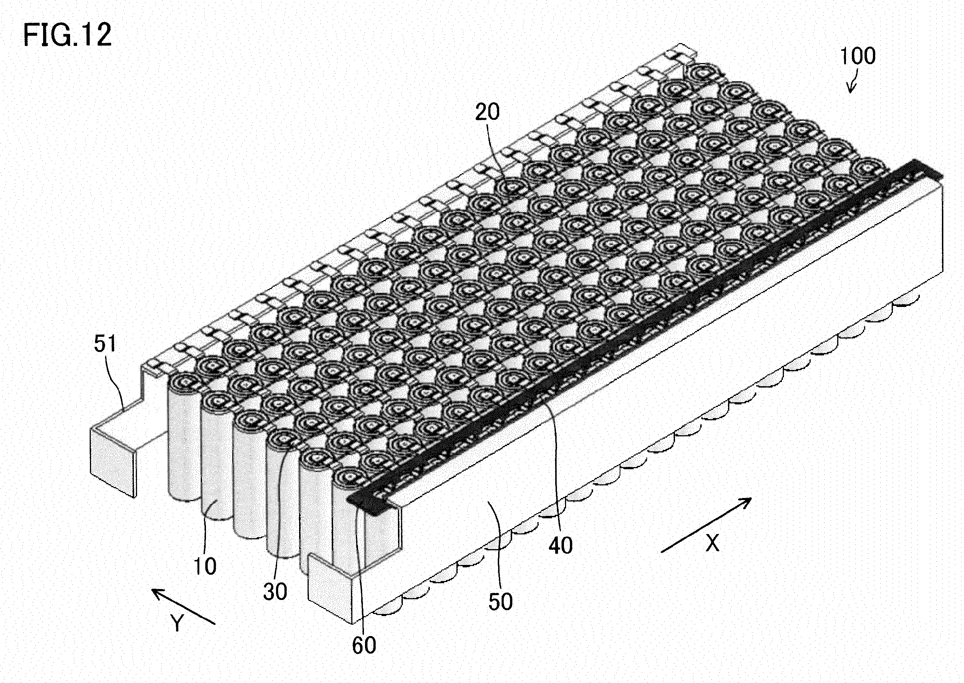

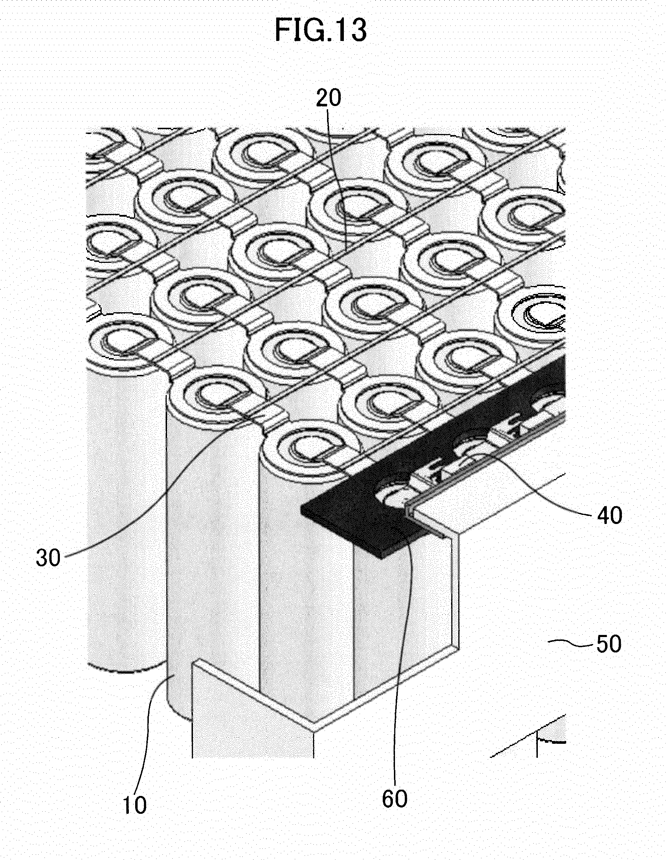

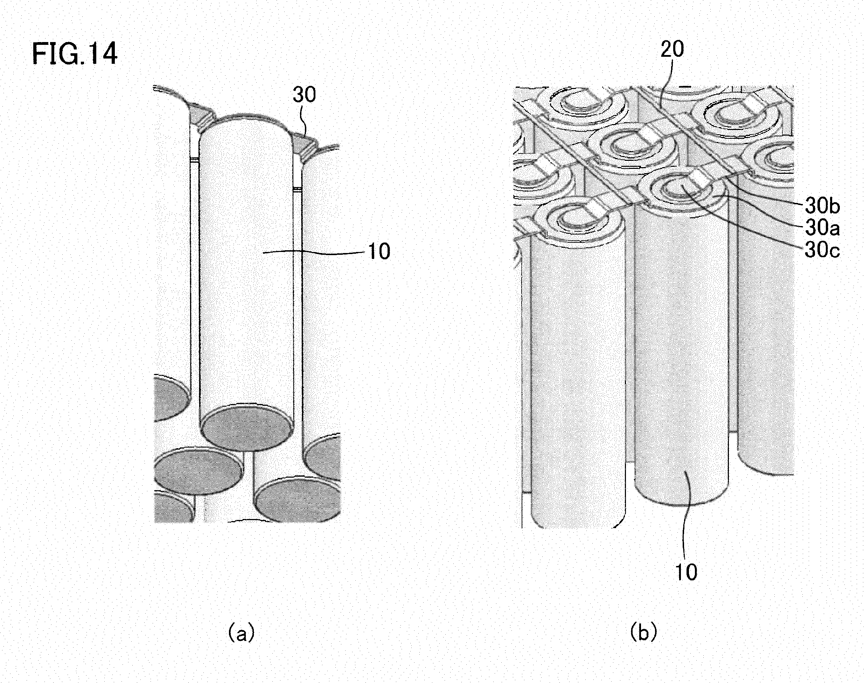

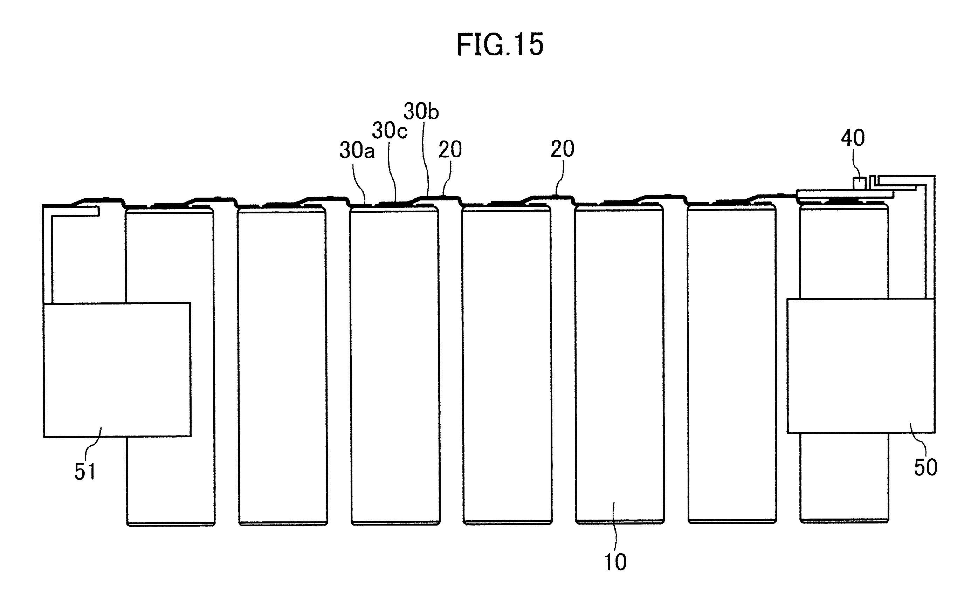

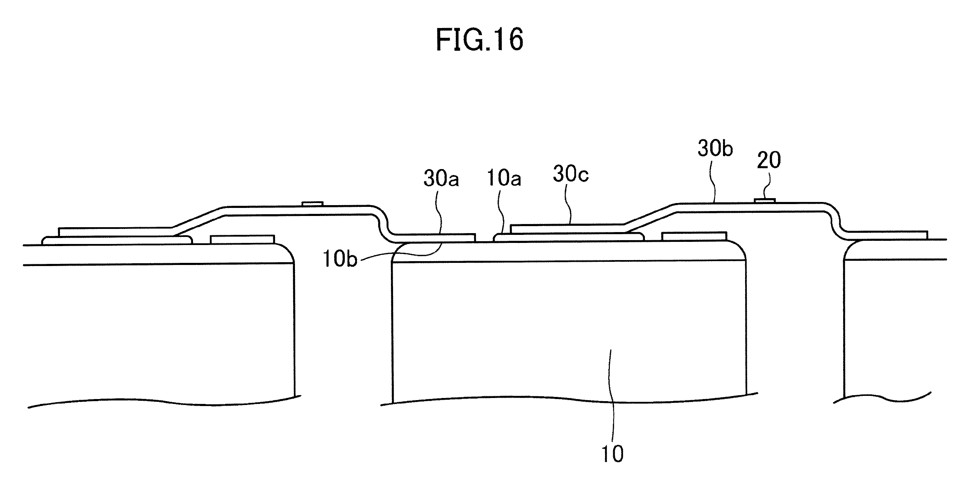

A structure of the battery module 100 according to another embodiment of the present disclosure will be described below with reference to FIGS. 12-16. Here, FIG. 12 shows an oblique view of the battery module 100 of the present embodiment. FIG. 13 shows an enlarged view of part of the battery module shown in FIG. 12. FIG. 14(a) shows part of the battery module 100 viewed obliquely from below. FIG. 14(b) shows part of the battery module 100 viewed obliquely from above. FIG. 15 is the battery module 100 viewed from a side along a column direction. FIG. 16 is an enlarged view of part of the battery module shown in FIG. 15. The structure of the second connecting member 30 is the only difference between the battery module 100 of the present embodiment and the battery module 100 shown in FIGS. 2-6. Thus, the structure of the second connecting member 30 will be described below, and explanations of the structures of the other elements are omitted.

Similar to the battery module in FIG. 2, a plurality of cells 10 are arranged in a grid array in the battery module 100 of the present embodiment as shown in FIG. 12. In the present embodiment, the periphery of the battery case of the cells 10 is not insulated, and a negative electrode terminal of a cell 10 can be located on the upper surface of the same cell 10 where a positive electrode terminal is located.

The second connecting member 30 which connects, in series, the cells 10 adjacent to each other in the column direction includes a portion 30a connected to a negative electrode terminal on the upper surface of a cell 10, a portion 30b extending from the upper surface of the cell 10 to the upper surface of an adjacent cell 10, and a portion 30c connected to a positive electrode terminal of the adjacent cell 10, as shown in FIG. 13, FIGS. 14(a) and 14(b), FIG. 15, and FIG. 16. The portion 30a connected to the negative electrode terminal has the shape of a ring along the periphery of the upper surface of the cell 10, as shown in FIG. 13 and FIG. 14(b). Further, the first connecting member 20 which connects, in parallel, the cells arranged in the row direction is connected to the portions 30b of the second connecting members 30 each connecting between the cells 10 adjacent to each other in the column direction, as shown in FIG. 12, FIG. 13, FIG. 15, and FIG. 16.

An advantage of the battery module 100 of the present disclosure is that in the event of an internal short-circuit in one of the cells 10 included in the battery module 100, the first connecting member 20 connected to the cell 10 in which the internal short-circuit has occurred is melted by Joule heat, thereby avoiding an influence on the other cells 10 and reduction in performance of the battery module 100 as a whole. However, in the event of an external short-circuit, it is inevitable that a short-circuit current flows from the output terminal 50 in the cells 10 connected together in series in the column direction.

Thus, to prevent the short-circuit current from flowing into the cells 10 connected together in series in the column direction in the event of an external short-circuit, it is preferable to provide current blocking elements (e.g., fuses) 40 in the row direction between the positive electrode output terminal 50 and the endmost cells 10 of the cells 10 arranged in the column direction, as shown in FIG. 1. The current blocking elements 40 may also be provided between the negative electrode output terminal 51 and the endmost cells 10 of the cells 10 arranged in the column direction. Further, instead of providing the current blocking elements, a current limiter (e.g., a PTC device) may be used.

It is possible to prevent the short-circuit current from flowing in the cells 10 connected together in series in the column direction even in the event of an external short-circuit, by providing the current blocking elements 40 between the output terminal 50 and the endmost cells 10 of the cells 10 arranged in the column direction as described above.

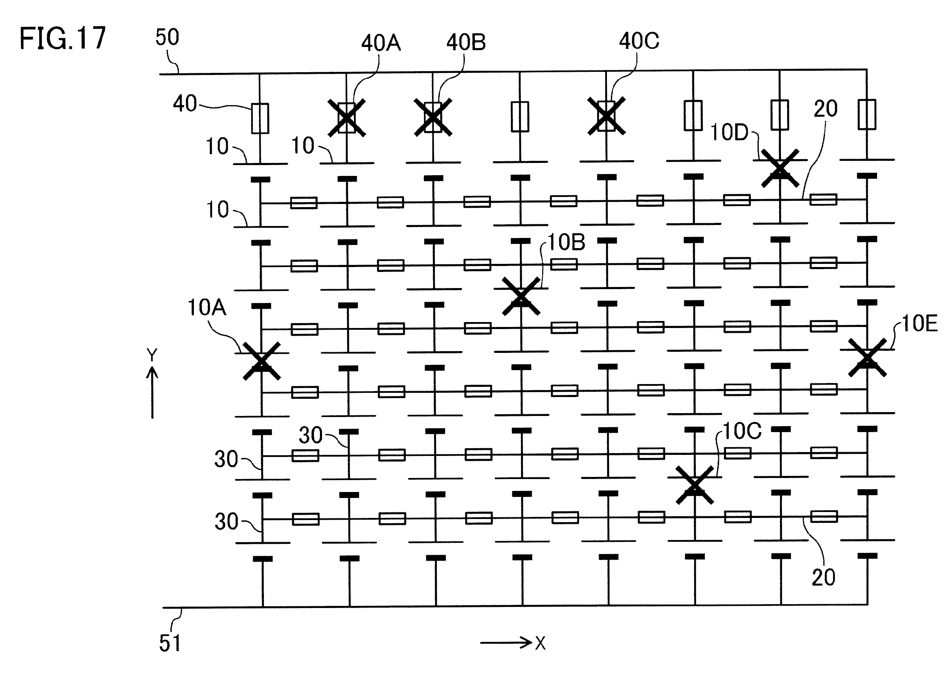

FIG. 17 is an equivalent circuit diagram for explaining a function of the current blocking element 40 when an external short-circuit occurs in the battery module 100 shown in FIG. 1.

In the event of an external short-circuit, a short-circuit current flows from the positive electrode output terminal 50 to each of the current blocking elements 40 which is provided for each column as shown in FIG. 17. FIG. 17 shows the state in which the current blocking elements 40A, 40B and 40C operate due to the short-circuit current, and block the current. FIG. 17 also shows that the inner pressure of the cells 10A, 10B, 10C, 10D and 10E are increased due to an increase in temperature of the electrolyte in the cells which is caused by the short-circuit current, and therefore a current blocking valve operates to block the current.

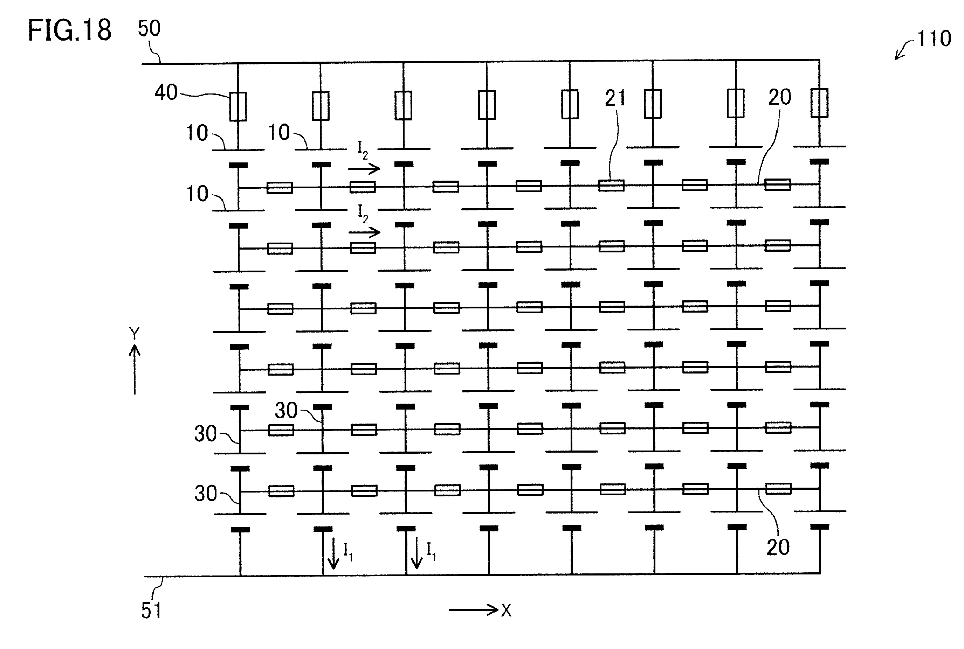

The present disclosure has been described in terms of preferable embodiments. However, the above description does not limit the present disclosure, and of course, various modification can be made. For example, in the above embodiments, the cells 10 arranged in the row direction are connected together in parallel by the first connecting member 20, but cells 10 adjacent to each other in the row direction may be connected in parallel by the first connecting member 20 via a current blocking element (e.g., a current fuse) 21, as in the battery module 110 shown in FIG. 18. In this case, if an internal short-circuit occurs in one of the cells 10, the current blocking element 21 connected to the cell 10 in which the internal short-circuit has occurred is melted by Joule heat generated due to a short-circuit current flowing in the cell 10 in which the internal short-circuit has occurred from the other cells in which no internal short-circuit has occurred via the current blocking element 21. As a result, it is possible to prevent the short-circuit current from flowing in the cell in which the internal short-circuit has occurred.

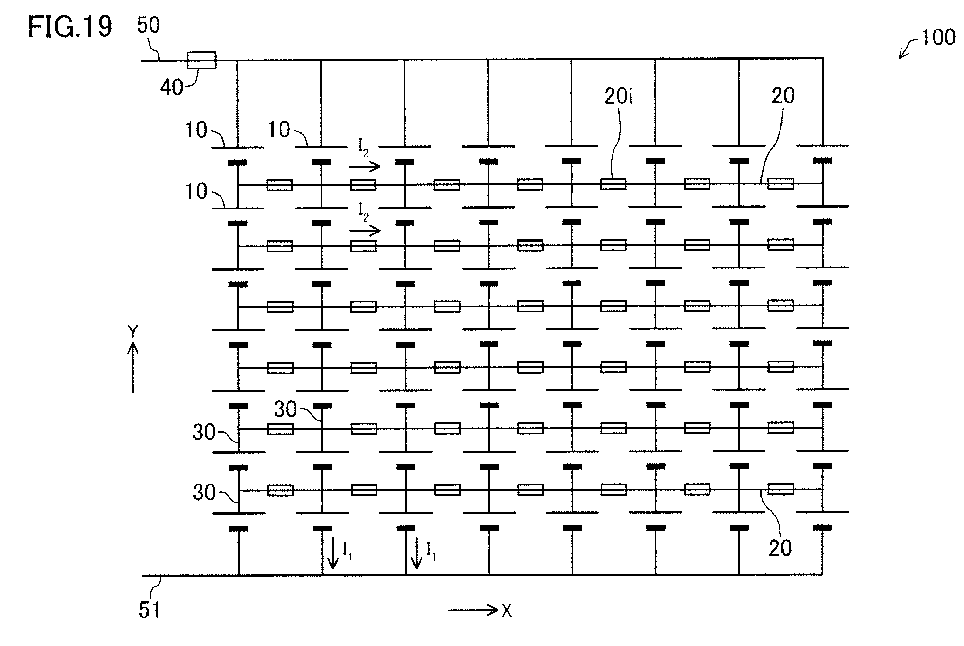

In the above embodiments, the current blocking elements 40 are provided between the positive electrode output terminal 50 and each of the cells 10 arranged in the row direction as shown in FIG. 1, but as in the battery module 100 shown in FIG. 19, one current blocking element 40 may be provided at a location of the positive electrode output terminal 50.

INDUSTRIAL APPLICABILITY

The present disclosure is useful as a power supply for driving a vehicle, an electric motorcycle, electric play equipment, etc.

DESCRIPTION OF REFERENCE CHARACTERS

| | |
|---|---|
| 10 | cell |
| 10A | cell |
| 20 | first connecting member |
| 20A, 20B | portion of first connecting member |
| 21 | current blocking element |
| 30 | second connecting member |
| 30a, 30b, 30c | portion of second connecting member |
| 40 | current blocking element(fuse) |
| 50 | positive electrode output terminal |
| 51 | negative electrode output terminal |
| 60 | circuit board |
| 100, 110 | battery module |

**Claims**

1. A battery module having a plurality of cells arranged in a grid array, wherein
   the cells arranged in a row direction are connected together in parallel by a first connecting member,
   the cells arranged in a column direction are connected together such that the cells adjacent to each other in the column direction are connected in series by a second connecting member, and
   when an internal short-circuit occurs in any one of the cells, the first connecting member connected to the cell in which the internal short-circuit has occurred is melted by Joule heat generated due to a short-circuit current flowing into the cell in which the internal short-circuit has occurred from the other cells in which no internal short-circuit occurs via the first connecting member.

2. The battery module of claim 1, wherein
   the first connecting member is made of a metal member having a uniform cross-sectional area, and
   the cross-sectional area of the first connecting member is set to a size which allows a temperature of the first connecting member to be equal to or greater than a melting point of the first connecting member due to the Joule heat generated by the short-circuit current flowing into the cell in which the internal short-circuit has occurred.

3. The battery module of claim 2, wherein
   when an internal short-circuit occurs in any one of the cells, a portion of the first connecting member between the cell in which the internal short-circuit has occurred and a cell adjacent to the cell is melted by the Joule heat.

4. The battery module of claim 1, wherein
   the first connecting member is connected to the second connecting members each connecting between the cells adjacent to each other in the column direction.

5. The battery module of claim 4, wherein
the first connecting member is made of a metal wire or a metal ribbon, and
the first connecting member is connected to the second connecting member which connects between the cells adjacent to each other in the column direction, by wire bonding, laser welding, or resistance welding.

6. The battery module of claim 2, wherein
the first connecting member is made of an aluminum material, and
the cross-sectional area of the first connecting member is equal to or less than 0.3 2 mm$^2$.

7. The battery module of claim 6, wherein
the first connecting member is made of an aluminum material, and
the cross-sectional area of the first connecting member is in a range of between 0.007 mm$^2$ and 0.12 mm$^2$.

8. The battery module of claim 1, wherein
a value of resistance of the second connecting member which connects between the cells adjacent to each other in the column direction is smaller than a value of resistance of the first connecting member which connects between the cells adjacent to each other in the row direction.

9. The battery module of claim 1, wherein
endmost cells of the cells arranged in the column direction are connected to an output terminal of the battery module, and
elements for blocking or limiting a current are provided in the row direction between the output terminal and the endmost cells of the cells arranged in the column direction.

10. A battery module having a plurality of cells arranged in a grid array, wherein
the cells arranged in a row direction are connected together such that the cells adjacent to each other in the row direction are connected together in parallel by a first connecting member via a current blocking element,
the cells arranged in a column direction are connected together such that the cells adjacent to each other in the column direction are connected together in series by a second connecting member, and
when an internal short-circuit occurs in any one of the cells, the current blocking element connected to the cell in which the internal short-circuit has occurred is melted by Joule heat generated due to a short-circuit current flowing into the cell in which the internal short-circuit has occurred from the other cells in which no internal short-circuit occurs via the current blocking element.

11. The battery module of claim 10, wherein the current blocking element is a current fuse.


**Amended claims under Art. 19.1 PCT**


**1.** (amended) A battery module having a plurality of cells arranged in a grid array, wherein
the cells arranged in a row direction are connected together in parallel by a first connecting member,
the cells arranged in a column direction are connected together such that the cells adjacent to each other in the column direction are connected in series by a second connecting member,
when the plurality of cells are charged or discharged via the second connecting member, a current which eliminates a potential difference between the cells arranged in the row direction flows in the first connecting member, and
when an internal short-circuit occurs in any one of the cells, the first connecting member connected to the cell in which the internal short-circuit has occurred is melted by Joule heat generated due to a short-circuit current flowing into the cell in which the internal short-circuit has occurred from the other cells in which no internal short-circuit occurs via the first connecting member.


**2.** The battery module of claim 1, wherein
the first connecting member is made of a metal member having a uniform cross-sectional area, and
the cross-sectional area of the first connecting member is set to a size which allows a temperature of the first connecting member to be equal to or greater than a melting point of the first connecting member due to the Joule heat generated by the short-circuit current flowing into the cell in which the internal short-circuit has occurred.

**3.** The battery module of claim 2, wherein
when an internal short-circuit occurs in any one of the cells, a portion of the first connecting member between the cell in which the internal short-circuit has occurred and a cell adjacent to the cell is melted by the Joule heat.

**4.** The battery module of claim 1, wherein
the first connecting member is connected to the second connecting member which connects between the cells adjacent to each other in the column direction.

**5.** The battery module of claim 4, wherein
the first connecting member is made of a metal wire or a metal ribbon, and
the first connecting member is connected to the second connecting member which connects between the cells adjacent to each other in the column direction, by wire bonding, laser welding, or resistance welding.

**6.** The battery module of claim 2, wherein
the first connecting member is made of an aluminum material, and
the cross-sectional area of the first connecting member is equal to or less than 0.3 mm$^2$.

**7.** The battery module of claim 6, wherein
the first connecting member is made of an aluminum material, and
the cross-sectional area of the first connecting member is in a range of between 0.007 mm$^2$ and 0.12 mm$^2$.

**8.** The battery module of claim 1, wherein
a value of resistance of the second connecting member which connects between the cells adjacent to each other in the column direction is smaller than a value of resistance of the first connecting member which connects between the cells adjacent to each other in the row direction.

**9.** The battery module of claim 1, wherein
endmost cells of the cells arranged in the column direction are connected to an output terminal of the battery module, and
elements for blocking or limiting a current are provided in the row direction between the output terminal and the endmost cells of the cells arranged in the column direction.

**10.** (amended) A battery module having a plurality of cells arranged in a grid array, wherein
the cells arranged in a row direction are connected together such that the cells adjacent to each other in the row direction are connected together in parallel by a first connecting member via a current blocking element,
the cells arranged in a column direction are connected together such that the cells adjacent to each other in the column direction are connected together in series by a second connecting member,
when the plurality of cells are charged or discharged via the second connecting member, a current which eliminates a potential difference between the cells arranged in the row direction flows in the first connecting member, and
when an internal short-circuit occurs in any one of the cells, the current blocking element connected to the cell in which the internal short-circuit has occurred is melted by Joule heat generated due to a short-circuit current flowing into the cell in which the internal short-circuit has occurred from the other cells in which no internal short-circuit occurs via the current blocking element.

**11.** The battery module of claim 10, wherein the current blocking element is a current fuse.

FIG.1

EP 2 579 360 A1

FIG.2

# FIG.3

FIG.4

(a)

(b)

FIG.5

FIG.6

# FIG.7

$I_S$   $I_S$   $I_S$   $I_S$

$(n-1)I_S$

10A

20

FIG.8

EP 2 579 360 A1

FIG.9

FIG.10

EP 2 579 360 A1

# FIG.11

EP 2 579 360 A1

FIG.12

# FIG.13

FIG.14

(a)

(b)

EP 2 579 360 A1

FIG.15

# FIG.16

EP 2 579 360 A1

FIG.17

EP 2 579 360 A1

# FIG.18

FIG.19

EP 2 579 360 A1

FIG.20

EP 2 579 360 A1

# FIG.21

EP 2 579 360 A1

# FIG.22

<table>
<tr><td colspan="2">**INTERNATIONAL SEARCH REPORT**</td><td colspan="2">International application No.<br>PCT/JP2011/002725</td></tr>
<tr><td colspan="4">A. CLASSIFICATION OF SUBJECT MATTER<br>*H01M2/34*(2006.01)i, *H01M2/10*(2006.01)i, *H01M2/20*(2006.01)i</td></tr>
<tr><td colspan="4">According to International Patent Classification (IPC) or to both national classification and IPC</td></tr>
<tr><td colspan="4">B. FIELDS SEARCHED</td></tr>
<tr><td colspan="4">Minimum documentation searched (classification system followed by classification symbols)<br>H01M2/34, H01M2/10, H01M2/20</td></tr>
<tr><td colspan="4">Documentation searched other than minimum documentation to the extent that such documents are included in the fields searched<br>　　Jitsuyo Shinan Koho　　　　　1922-1996　Jitsuyo Shinan Toroku Koho　　1996-2011<br>　　Kokai Jitsuyo Shinan Koho　　1971-2011　Toroku Jitsuyo Shinan Koho　　1994-2011</td></tr>
<tr><td colspan="4">Electronic data base consulted during the international search (name of data base and, where practicable, search terms used)</td></tr>
</table>

C. DOCUMENTS CONSIDERED TO BE RELEVANT

| Category* | Citation of document, with indication, where appropriate, of the relevant passages | Relevant to claim No. |
|---|---|---|
| X<br>Y | JP 2002-10501 A (Honda Motor Co., Ltd.),<br>11 January 2002 (11.01.2002),<br>paragraphs [0021] to [0032]; fig. 4<br>& US 2001/0054877 A1 | 1,3,4,10,11<br>2,5-9 |
| Y | JP 2009-231138 A (Toshiba Corp.),<br>08 October 2009 (08.10.2009),<br>paragraphs [0063] to [0067]; fig. 13<br>(Family: none) | 2,5-8 |
| Y | JP 6-223815 A (NGK Insulators, Ltd.),<br>12 August 1994 (12.08.1994),<br>paragraph [0010]<br>(Family: none) | 2,5-8 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>　　26 July, 2011 (26.07.11) | Date of mailing of the international search report<br>　　09 August, 2011 (09.08.11) |
|---|---|
| Name and mailing address of the ISA/<br>　　Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2011/002725 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 10-322915 A (Fujitsu Ltd.),<br>04 December 1998 (04.12.1998),<br>paragraphs [0024] to [0027]; fig. 2<br>& US 6051955 A          & EP 880214 A2<br>& CN 1199935 A | 9 |
| A | JP 2004-31268 A (Nissan Motor Co., Ltd.),<br>29 January 2004 (29.01.2004),<br>paragraphs [0008] to [0016]; fig. 1<br>(Family: none) | 1-11 |
| A | JP 2004-55492 A (Nissan Motor Co., Ltd.),<br>19 February 2004 (19.02.2004),<br>paragraphs [0025] to [0028]; fig. 4<br>(Family: none) | 1-11 |

Form PCT/ISA/210 (continuation of second sheet) (July 2009)

**INTERNATIONAL SEARCH REPORT**

| International application No. |
|---|
| PCT/JP2011/002725 |

---

**Box No. II   Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III   Observations where unity of invention is lacking (Continuation of item 3 of first sheet)**

This International Searching Authority found multiple inventions in this international application, as follows:
   In the document 1, an electric storage device having a configuration similar to that set forth in claim 1 is described.
   Consequently, the invention in claim 1 does not have a special technical feature in the light of the disclosure in the document 1, and therefore, it is obvious that the invention in claim 1 and the inventions in claims 2-11 do not comply with unity.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7671565 B
- JP 2001511635 PCT
- JP H6223815 B
- JP 2004031268 A